# EUROPEAN PATENT APPLICATION

(11) **EP 3 483 130 A1**
(43) Date of publication of application: **15.05.2019**
(21) Application number: 16907997.7
(22) Date of filing: 12.09.2016
(51) Int. Cl.: C03C 27/08

(54) **TEMPERED VACUUM GLASS**

(30) Priority: 05.07.2016 CN 201610521440
(71) Applicant: Luoyang Landglass Technology Co., Ltd., Henan 471000 (CN)
(72) Inventor: ZHAO, Yan, Luoyang Henan 471000 (CN); LI, Yanbing, Luoyang Henan 471000 (CN); LIANG, Xiping, Luoyang Henan 471000 (CN); LI, Suzhen, Luoyang Henan 471000 (CN)
(74) Representative: Grünecker Patent- und Rechtsanwälte PartG mbB
(86) International application number: PCT/CN2016/098710
(87) International publication number: WO 2018/006493

(57) **Abstract**

Tempered vacuum glass, including at least two glass sheets (1) arranged parallel to each other. At least one of the glass sheets (1) is tempered glass. Peripheries of adjacent glass sheets (1) are sealed using an edge sealing body (2). Support members (3) are disposed in an array between the glass sheets to form a vacuum space. The edge sealing body (2) is a metallic edge sealing structure formed by sealing the peripheries of the adjacent glass sheets (1) with metal. The edge sealing body (2) is composed of a transition layer, a metallized layer, an intermetallic compound layer, a solder layer, an intermetallic compound layer, a metallized layer, and a transition layer stacked in sequence. The metallized layer is a spongy skeleton structure formed by sintering a metal paste. After being heated and melted, solder fills pores of the spongy skeleton structures on the surfaces of adjacent metallized layers to form the intermetallic compound layers. The tempered glass has the advantages of both tempered glass and vacuum glass, and the edge sealing body (2) can satisfy the requirements for edge sealing tightness of the vacuum glass and ensure mechanical performance, durability, and weathering resistance of the tempered vacuum glass

## Description

### TECHNICAL FIELD

This disclosure relates to tempered vacuum glass.

### BACKGROUND

Vacuum glass, as a new generation of energy-saving and environment-friendly glass, has promising application prospects in the field of new energy development and utilization as well as energy conservation because of its excellent properties of light transmission, thermal insulation, sound insulation and heat preservation..The vacuum glass consists of two or more pieces of glass that are air-tightly sealed using a sealing material. The reliability of the sealing body directly affects the usability and service life of the vacuum glass.

Vacuum glass products generally use low-melting-point glass powder for the sealing of the vacuum glass, with the sealing temperature commonly at 420-450°C. This not only consumes a large amount of energy, but also limits the application of a tempering technology in the vacuum glass. In addition, the vacuum glass produced by using other organic materials as edge sealing materials of the vacuum glass is poor in mechanical performance, durability, and weathering resistance, and thus the service life of the vacuum glass is greatly shortened.

### SUMMARY

The present invention provides tempered vacuum glass, which has the advantages of both tempered vacuum glass and both vacuum glass and ensures the air tightness, mechanical performance, durability, and weathering resistance of an edge sealing structure of the vacuum glass.

The embodiment of this disclosure provides tempered vacuum glass, including at least two glass sheets arranged parallel to each other. At least one of the glass sheets is tempered glass. Peripheries of adjacent glass sheets are sealed using an edge sealing body. Support members are disposed in an array between the glass sheets to form a vacuum space. The edge sealing body is a metallic edge sealing structure formed by sealing the peripheries of the adjacent glass sheets with metal. The edge sealing body is composed of a transition layer, a metallized layer, an intermetallic compound layer, a solder layer, an intermetallic compound layer, a metallized layer, and a transition layer stacked in sequence. The metallized layer is a spongy skeleton structure formed by sintering a metal paste. After being heated and melted, solder fills pores of the spongy skeleton structures on the surfaces of adjacent metallized layers to form the intermetallic compound layers.

For example, the solder layer is formed by melting low-temperature tin-containing solder, which is the combination of tin and one or several of transition metal, rare metal, and precious metal.

Further, the material of the solder layer is Sn-Ag-Cu, Sn-Au, Sn-Pb, Sn-Ag, Sn-Cu, Sn-Zn, Sn-Bi, Sn-Sb, Sn-Ag-Cu-Bi, Sn-Ag-Bi-In-Ti, Sn-Ag-Bi-In, Sn-Ag-Cu-In-Ti, or Sn-Ag-Bi-Cu-In-Ti alloy.

For example, the metal paste is a silver paste, a silver-coated copper paste, or a silver-coated nickel paste; the silver paste, the silver-coated copper paste, or the silver-coated nickel paste contains one or several of rare metal, transition metal, and precious metal.

For example, the surface of the intermetallic compound layer bonded to the solder layer is a tooth surface.

Further, the intermetallic compound layer includes one of or the combination of Ag₃Sn, AgZn or In₃Sn.

For example, the metallized layer contains 3-10% of glass phase.

For example, the transition layer is formed by sintering the metal paste on the glass sheets and includes a glass phase layer wrapping metallic particles and a metallic oxide layer in a mesh structure.

For example, at least one of the glass sheets is provided with an evacuation port, and a seal piece configured to seal the evacuation port.

For example, a secondary peripheral sealing body filled with a sealant, resin or plastic is provided outside the edge sealing body.

For example, there exists no obvious boundary between the layers, which are mutually inclusive. The metal paste in this disclosure is formed by mixing a conductive phase, glass powder, and organic additives.

For example, the transition layer includes a glass phase sintered together with the glass sheets; the glass phase wraps metallic particles; an oxide phase exists in a metal particle skeleton. That is, the metallic particles are oxidized at high temperature - the glass phase in the silver paste is melted to soak silver particle surfaces - silver oxide is dissolved in the glass phase - the glass phase containing the silver oxide penetrates into the glass surface.

This disclosure may have the following beneficial technical effects: 1. the metallized layer contains the glass phase; during a sintering process, the glass phase is at the bottom of the metallized layer under the action of capillary pressure, and the metallized layer in the shape of a spongy skeleton are sintered together with the sheets; the glass phase layer wrapping the metallic particles is called a metallic transition layer. The metallized layer in this disclosure has two transition layers, one is a metal transition layer describing the relationship between the metallized layer and the sheet, and the other is a metallic oxide transition layer in a mesh structure describing the relationship between the metal and the glass phase, which is synchronously sintered and mutually inclusive with the metal transition layer to form an integrated structure. The transition layer has strong adhesion force and good thermal shock resistance. The brazed solder can be cooled quickly, thereby avoiding silver corrosion.
2. The intermetallic compound layer in this disclosure is a tooth surface layer. The solder fills pores of the spongy skeleton structure, that is, the solder soaks the metallized layer that is not wrapped by the glass phase to implement airtight sealing. The solder forms a tooth bond to firmly anchor the metallized layers on the upper and lower sheets together so that the obtained sealing body is more firm and reliable, and the airtightness is better.
3. Compared with the prior art, the edge sealing body in this disclosure can satisfy the requirements for airtightness and adapt well to the stress generated during the use of the vacuum glass, so that the mechanical performance is better, and the stability and safety of the vacuum glass in use.

### BRIEF DESCRIPTION OF THE DRAWINGS

FIG. 1 is a structure diagram of the tempered vacuum glass provided by an embodiment of this disclosure;
FIG. 2 is a schematic diagram of Embodiment 1;
FIG. 3 is a schematic diagram of Embodiment 2;
FIG. 4 is a schematic diagram of Embodiment 3;
FIGS. 5 and 6 are microscopic views of a metallographic structure of an edge sealing body.

Reference signs: 1. Glass sheet, 2. Edge sealing body, 3. Support member, 4. Evacuation port, 5. Seal piece, 6. Secondary peripheral sealing body.

### DETAILED DESCRIPTION

Now specific embodiments will be presented here to further explain the tempered vacuum glass provided in the embodiments of this disclosure, so that a person skilled in the art can better understand and implement the present invention. However, the specific embodiments should not be taken as limiting the present invention.

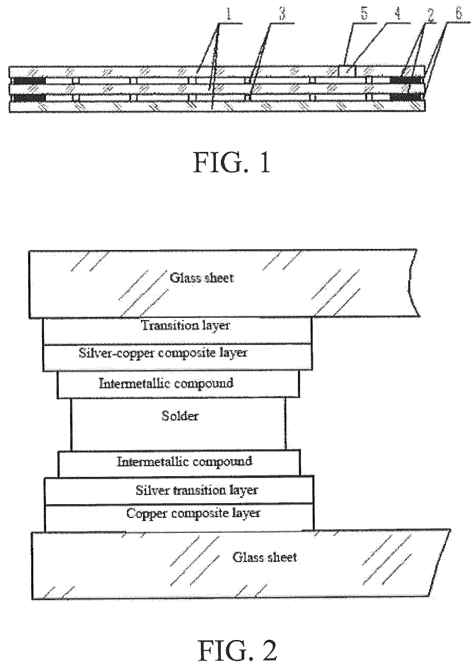

As shown in FIG. 1, the embodiment of this disclosure provides tempered vacuum glass, including at least two glass sheets 1 arranged parallel to each other. At least one of the glass sheets 1 is tempered glass. A vacuum space is formed by sealing the peripheries of adjacent glass sheets 1 using an edge sealing body 2 and disposing support members 3 in in an array between the adjacent glass sheets 1. A secondary peripheral sealing body 6 filled with a sealant, resin or plastic is provided outside the edge sealing body 2 of the adjacent glass sheets 1. The edge sealing body 2 is a metallic edge sealing structure formed by sealing the peripheries of the adjacent glass sheets 1 with metal. The metal sealing method includes a method of partially melting an alloy material including tin at high temperature during laser heating or induction heating to avoid the annealing of the tempered glass. The metal sealing temperature is not higher than 250°C. The vacuum glass can be compounded with hollow sheets, laminated sheets, and other types of sheets. Materials of support members may be inorganic materials, such as metal, glass, or ceramic. At least one of the glass sheets 1 is provided with an evacuation port 4, and a seal piece 5 configured to seal the evacuation port 4. The evacuation port 4 is sealed with sheet metal.

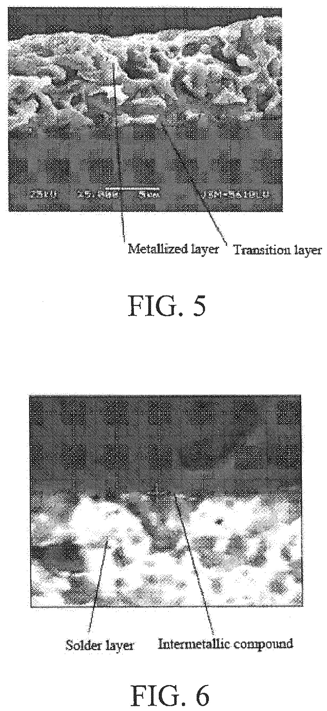

The edge sealing body 2 of this disclosure is composed of a a transition layer, a metallized layer, an intermetallic compound layer, a solder layer, an intermetallic compound layer, a metallized layer, and a transition layer stacked in sequence. No obvious boundary exists between the layers, which are mutually inclusive. As shown in FIGS. 5 and 6, the metallized layer is a spongy skeleton structure formed by sintering a metal paste. After being heated and melted, solder fills pores of the spongy skeleton structures on the surfaces of adjacent metallized layers to form the intermetallic compound layers. The metal paste is a silver paste, a silver-coated copper paste, or a silver-coated nickel paste. The silver paste, silver-coated copper paste, or silver-coated nickel paste contains one or several of rare metal, transition metal, and precious metal. The solder layer is formed by melting low-temperature tin-containing solder. The low-temperature tin-containing solder is the combination of tin and one or several of transition metal, rare metal, and precious metal. The material of the solder layer is Sn-Ag-Cu, Sn-Au, Sn-Pb, Sn-Ag, Sn-Cu, Sn-Zn, Sn-Bi, Sn-Sb, Sn-Ag-Cu-Bi, Sn-Ag-Bi-In-Ti, Sn-Ag-Bi-In, Sn-Ag-Cu-In-Ti, or Sn-Ag-Bi-Cu-In-Ti alloy.

The surface of the intermetallic compound layer bonded to the solder layer is a tooth surface. The intermetallic compound layer includes one of or the combination of Ag₃Sn, AgZn, and In₃Sn. The metallized layer contains 3-10% of glass phase. The solder soaks the region of the metallized layer that is not wrapped by the glass phase to implement airtight sealing.

The transition layer is formed by sintering the metal paste on the glass sheets 1, and includes a glass phase layer wrapping metallic particles and a metallic oxide layer in a mesh structure.

### Embodiment 1

As shown in FIG. 2, the edge sealing body 2 in this embodiment is composed of a transition layer, a silver layer, an intermetallic compound layer, a solder layer, an intermetallic compound layer, a silver layer, and a transition layer stacked in sequence. In some embodiments, the metallized layer is spongy skeleton structure formed by sintering a metal paste, which is a silver paste. Besides, the solder layer is low-temperature tin-containing solder, which is the combination of tin and transition metal, and of tin and precious metal. The material of the solder layer is Sn-Cu, Sn-Zn, Sn-Ag-Cu, Sn-Ag, or Sn-Au.

The intermetallic compound layer is a tooth surface layer formed through the reaction between the solder layer and the silver layer. The rugged tooth surface layer ensures that the silver layer and the solder are bonded more firmly. The solder fills the pores of the spongy skeleton structure of the silver layer, rendering better air tightness. The intermetallic compound layer includes Ag₃Sn or AgZn, or the combination of different types of intermetallic compounds. The silver layer contains 5-10% of glass phase. The solder soaks the region of the silver layer that is not wrapped by the glass phase to implement airtight sealing.

The transition layer shown in FIG. 2 is formed by sintering the silver paste on the glass sheets. The transition layer includes a metal transition layer wrapping silver particles and a silver oxide transition layer in a mesh structure. During the sintering process, the silver paste is sintered together with the glass sheets under the action of capillary pressure. Since the transition layer includes the metal transition layer wrapping silver particles and the silver oxide layer in a mesh structure, and the two layers are synchronously sintered and are mutually inclusive to form an integrated structure, the transition layer has strong adhesion force and good thermal shock resistance. Brazed solder can be cooled quickly.

### Embodiment 2

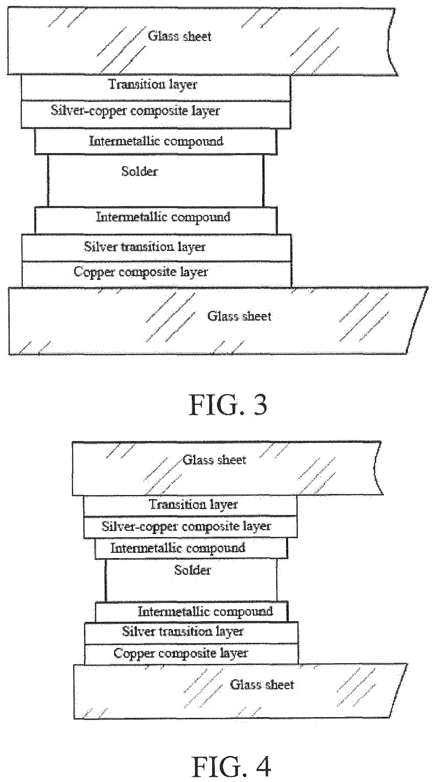

As shown in FIG. 3, the edge sealing body 2 in this embodiment is composed of a transition layer, a silver-copper composite layer, an intermetallic compound layer, a solder layer, an intermetallic compound layer, a silver-copper composite layer, and a transition layer stacked in sequence. The metallized layer is a spongy skeleton structure formed by sintering a metal paste, which is a silver-coated copper paste. The solder layer is formed by melting low-temperature tin-containing solder; the tin-containing solder is the combination of tin and transition metal, and of tin and rare metal, including Sn-Ag-Bi-In, Sn-Ag-Bi-Cu-In-Ti, Sn-Ag-Bi-In-Ti, or Sn-Ag-Cu-In-Ti alloy.

The intermetallic compound layer is a tooth surface layer formed through the reaction between the solder layer and the silver-copper composite layer. The rugged tooth surface layer ensures that the silver-copper composite layer and the solder are bonded more firmly. The solder fills the pores of the spongy skeleton structure of the silver-copper composite layer, rendering better air tightness. The intermetallic compound layer includes one of or the combination of Ag₃Sn, AgZn, and In₃Sn. The silver-copper composite layer contains 3-10% of glass phase. The solder soaks the region of the silver-copper composite layer that is not wrapped by the glass phase to implement airtight sealing.

The transition layer is formed by sintering the silver-coated copper paste on the surface of glass sheets, and includes a metal transition layer wrapping silver particles and copper particles. There are a silver oxide transition layer and a copper oxide transition layer in a mesh structure in silver particle and copper particle skeletons of the metal transition layer. During the sintering process, the silver-coated copper paste is sintered together with the glass sheets under the action of capillary pressure. Since the transition layer includes glass phase layer, silver oxide and copper oxide layers in a mesh structure, which are synchronously sintered and mutually inclusive with each other to form an integrated structure, the transition layer has strong adhesion and good thermal shock resistance. Brazed solder can be cooled quickly. During the tempering of the glass sheets, the metallic particles are firmly sintered together with the glass sheets by the glass phase in a sintering furnace. If damage occurs, the damage may occur only on the shallow surfaces of the glass sheets and does not influence performance of the glass.

### Embodiment 3

As shown in FIG. 4, the edge sealing body 2 in this embodiment is composed of a transition layer, a silver-nickel composite layer, an intermetallic compound layer, a solder layer, an intermetallic compound layer, a silver-nickel composite layer, and a transition layer stacked in sequence. The metallized layer is a spongy skeleton structure formed by sintering a metal paste, and the metal paste is a silver-coated nickel paste. The solder layer is low-temperature tin-containing solder, which is the combination of tin, and transition metal, and rare metal. The solder layer is Sn-Pb, Sn-Sb, Sn-Bi or Sn-Ag-Cu-Bi.

The intermetallic compound layer is a tooth surface layer formed through the reaction between the solder layer and the silver-nickel composite layer. The rugged tooth surface layer ensures that the silver layer and the solder are bonded more firmly. The solder fills the pores of the spongy skeleton structure of the silver-nickel composite layer, rendering better air tightness. The intermetallic compound layer includes Ag₃Sn. The silver-nickel composite layer contains 3-10% of glass phase. The solder soaks the region of the silver-nickel composite layer that is not wrapped by the glass phase to implement airtight sealing.

The transition layer is formed by sintering the silver-coated nickel paste on the surfaces of glass sheets and includes a metal transition layer wrapping silver particles and nickel particles. There are a silver oxide transition layer and a nickel oxide transition layer in a mesh structure in silver particle and nickel particle skeletons of the metal transition layer. During the sintering process, the silver-coated nickel paste is sintered together with the glass sheets under the action of capillary pressure. Since the transition layer includes glass phase layer, silver oxide and nickel oxide layers in a mesh structure, which are synchronously sintered and mutually inclusive with each other to form an integrated structure, the transition layer has strong adhesion and good thermal shock resistance. Brazed solder can be cooled quickly.

In this disclosure, the silver paste used may also contain one of or the combination of several of rare metal, transition metal, and precious metal, so that metallized layers such as a silver-titanium composite layer and a silver-hafnium-rhenium composite layer can be formed. The silver-coated copper paste used may also contain one of or the combination of several of rare metal, transition metal, and precious metal, so that metallized layers such as a silver-indium-copper composite layer, a silver-titanium-copper composite layer, and a silver-rhenium-copper composite layer can be formed. The silver-coated nickel paste used may contain one of or the combination of several of rare metal, transition metal, and precious metal, so that metallize layers such as a silver-manganese-nickel composite layer, a silver-hafnium-nickel composite layer, and a silver-molybdenum-nickel composite layer can be formed.

The embodiments of this disclosure provide tempered vacuum glass, and the edge sealing body involved therein can satisfy the requirements for edge sealing airtightness of vacuum glass. The vacuum glass has the advantages of both tempered glass and both vacuum glass, and ensures the mechanical performance, durability, and weathering resistance of an edge sealing structure of the tempered vacuum glass.

## Claims

1. Tempered vacuum glass, comprising at least two glass sheets (1) arranged parallel to each other, wherein at least one of the glass sheets (1) is tempered glass; peripheries of adjacent glass sheets (1) are sealed using an edge sealing body (2); support members (3) are disposed in an array between the glass sheets to form a vacuum space; the edge sealing body (2) is a metallic edge sealing structure formed by sealing the peripheries of the adjacent glass sheets (1) with metal; the edge sealing body (2) is composed of a transition layer, a metallized layer, an intermetallic compound layer, a solder layer, an intermetallic compound layer, a metallized layer, and a transition layer stacked in sequence; the metallized layer is a spongy skeleton structure formed by sintering a metal paste; after being heated and melted, solder fills pores of the spongy skeleton structures on the surfaces of adjacent metallized layers to form the intermetallic compound layers.

2. The tempered vacuum glass according to claim 1, wherein the solder layer is formed by melting low-temperature tin-containing solder, and the low-temperature tin-containing solder is the combination of tin and one or several of transition metal, rare metal, and precious metal.

3. The tempered vacuum glass according to claim 2, wherein the material of the solder layer is Sn-Ag-Cu, Sn-Au, Sn-Pb, Sn-Ag, Sn-Cu, Sn-Zn, Sn-Bi, Sn-Sb, Sn-Ag-Cu-Bi, Sn-Ag-Bi-In-Ti, Sn-Ag-Bi-In, Sn-Ag-Cu-In-Ti, or Sn-Ag-Bi-Cu-In-Ti alloy.

4. The tempered vacuum glass according to Claim 1, wherein the metal paste is a silver paste, a silver-coated copper paste, or a silver-coated nickel paste; the silver paste, the silver-coated copper paste, or the silver-coated nickel paste contains one or several of rare metal, transition metal, and precious metal.

5. The tempered vacuum glass according to claim 1, wherein the surface of the intermetallic compound layer bonded to the solder layer is a tooth surface.

6. The tempered vacuum glass according to claim 5, wherein the intermetallic compound layer comprises one of or the combination of Ag₃Sn, AgZn, or In₃Sn.

7. The tempered vacuum glass according to claim 1, wherein the intermetallic compound layer contains 3-10% of glass phase.

8. The tempered vacuum glass according to claim 1, wherein the transition layer is formed by sintering the metal paste on the glass sheets (1) and comprises a glass phase layer wrapping metallic particles and a metal oxide layer in a mesh structure.

9. The tempered vacuum glass according to claim 1, wherein at least one of the glass sheets (1) is provided with an evacuation port (4) and a seal piece (5) configured to seal the evacuation port (4).

10. The tempered vacuum glass according to claim 1, wherein a secondary peripheral sealing body (6) filled with a sealant, resin or plastic is provided outside the edge sealing body (2).
